# EUROPÄISCHE PATENTSCHRIFT

(11) **EP 1 583 808 B1**
(45) Veröffentlichungstag und Bekanntmachung des Hinweises auf die Patenterteilung: **27.09.2006**
(21) Anmeldenummer: 03778320.6
(22) Anmeldetag: 19.11.2003
(51) Int. Cl.: C09D 175/04, C08G 18/62, C08G 18/79

(54) **MEHRKOMPONENTENSYSTEM UND SEINE VERWENDUNG ZUR HERSTELLUNG EINER THERMISCH UND MIT AKTINISCHER STRAHLUNG HÄRTBAREN TRIPLE-CURE-MISCHUNG**
MULTI-COMPONENT SYSTEM AND THE USE THEREOF FOR PRODUCING A TRIPLE CURE MIXTURE WHICH CAN BE HARDENED THERMALLY AND BY MEANS OF ACTINIC RADIATION
SYSTEME A PLUSIEURS COMPOSANTS ET UTILISATION DE CELUI-CI DANS LA FABRICATION D'UN MELANGE A DURCISSAGE TRIPLE POUVANT ETRE DURCI SOUS L'EFFET DE LA CHALEUR ET D'UN RAYONNEMENT ACTINIQUE

(30) Priorität: 13.01.2003 DE 10300798
(43) Veröffentlichungstag der Anmeldung: 12.10.2005
(73) Patentinhaber: BASF Coatings AG, 48165 Münster (DE); Farwick, Thomas, 48727 Billerbeck (DE)
(72) Erfinder: BAUMGART, Hubert, 48162 Münster (DE); COOK, Vince, 48165 Münster (DE); FARWICK, Thomas, 48727 Billerbeck (DE); HASSE, Sandra, 48317 Drensteinfurt (DE); MAYENFELS, Peter, 48163 Münster (DE); SCHULZE-FINKENBRINK, Guido, 48165 Münster (DE)
(86) Internationale Anmeldenummer: PCT/EP2003/012917
(87) Internationale Veröffentlichungsnummer: WO 2004/063299

(56) Entgegenhaltungen:
- EP-A- 0 594 068
- EP-A- 0 915 113
- DE-A- 10 048 849

## Beschreibung

Die Erfindung betrifft ein neues Mehrkomponentensystem, zumindest umfassend mindestens eine Komponente (I) und mindestens eine Komponente (II). Außerdem betrifft die vorliegende Erfindung die Verwendung des neuen Mehrkomponentensystems zur Herstellung einer neuen, thermisch und mit aktinischer Strahlung härtbaren Triple-Cure-Mischung. Des Weiteren betrifft die vorliegende Erfindung die Verwendung der neuen Triple-Cure-Mischung zur Herstellung von Formteilen und Folien sowie als Beschichtungsstoff, Klebstoff und Dichtungsmasse zur Herstellung von Beschichtungen, Klebschichten und Dichtungen.

Aus der europäischen Patentanmeldung EP 0 915 113 A 1 sind thermisch härtbare Mischungen bekannt, die als Bindemittel mindestens ein hydroxylgruppenhaltiges Harz und mindestens ein carbamatgruppenhaltiges Harz und als Vernetzungsmittel mindestens ein Aminoplastharz und mindestens ein Polyisocyanat enthalten. Aus den Beispielen gehen jedoch nur Mischungen, die blockierte Polyisocyanate enthalten und demnach nicht aus Mehrkomponentensystemen hergestellt wurden, hervor. Der Anteil des Aminoplastharzes wird so begrenzt, dass das Aminoplastharz nur mit den Carbamatgruppen und nicht mit den Hydroxylgruppen reagiert. Die Hydroxylgruppen bleiben dadurch frei für die Reaktion mit den Polyisocyanaten. In dieser Weise werden zwei Vemetzungsmechanismen realisiert, die nacheinander und/oder nebeneinander ablaufen können. Dadurch kann das Problem des Wegfließens der applizierten Mischung während des Beginns der thermischen Vernetzung gelöst werden. Die bekannte thermisch härtbare Mischung kann aber nicht mit aktinischer Strahlung gehärtet werden.

Aus dem europäischen Patent EP 0 675 141 B 1 sind thermisch und mit aktinischer Strahlung härtbare Mischungen bekannt, die als Bindemittel ebenfalls mindestens ein hydroxylgruppenhaltiges Harz und mindestens ein carbamatgruppenhaltiges Harz enthalten. Als Vernetzungsmittel können Aminoplastharze, Polyisocyanate, inklusive blockierte Polyisocyanate, Phenolharze, cycloaliphatische Epoxide, Glycidylepoxide, Carbodiimide, Polycarbodilmide und Gemische dieser Vernetzungsmittel verwendet werden. Aus den Beispielen geht nur die Verwendung von Aminoplastharz hervor. Die cycloaliphatische Epoxide enthaltenden Mischungen können in der Gegenwart von Photoinitiatoren auf der Basis von Oniumsalzen durch UV-Strahlung vernetzt werden. Die Strahlenhärtung läuft nach einem kationischen Mechanismus ab. Darüber hinaus können die Mischungen noch N-Carbamat(meth)acrylate der allgemeinen Formel

CH2=C(R)-C(O)-O-X-O-C(O)-NR'R",

worin R ein Wasserstoffatom oder eine Methylgruppe, R' ein Wasserstoffatom, R" ein Wasserstoffatom oder eine Alkylgruppe mit 1 bis 8 Kohlenstoffatomen und X ein linearer, verzweigter, cyclischer, substituierter und unsubstitiuierter Kohlenwasserstoffrest mit 1 bis 20 Kohlenstoffatomen bedeutet, enthalten. Diese Verbindungen, die nur eine mit aktinischer Strahlung aktivierbare Gruppe enthalten, können auch in Mischungen verwendet werden, die durch Elektronenstrahlung oder durch UV-Strahlung nach einem radikalischen Mechanismus vernetzt werden können. Nähere Angaben werden hierzu jedoch nicht gemacht, und aus den Beispielen gehen lediglich thermisch härtbare Mischungen hervor.

Die bekannten thermisch sowie thermisch und mit aktinischer Strahlung härtbaren Mischungen können als Beschichtungsstoffe zur Herstellung von vergleichsweise chemikalienbeständigen, witterungsbeständigen und etchbeständigen Beschichtungen verwendet werden. Die gestiegenen Anforderungen des Marktes verlangen aber eine weitere Verbesserung dieses Eigenschaftsprofils. Außerdem müssen der Verlauf, die Kratzfestigkeit, die Benetzung und Haftung, die Schwitzwasserbeständigkeit und die Härte der Beschichtungen weiter verbessert werden.

Der vorliegenden Erfindung lag daher die Aufgabe zugrunde, ein neues Mehrkomponentensystem bereitzustellen, das sich hervorragend zur Herstellung einer neuen, thermisch und mit aktinischer Strahlung härtbaren Mischung eignet. Die neue, thermisch und mit aktinischer Strahlung härtbare Mischung soll sich insbesondere zur Herstellung von neuen Formteilen und Folien sowie als neuer Beschichtungsstoff, neuer Klebstoff und neue Dichtungsmasse zur Herstellung von Beschichtungen, Klebschichten und Dichtungen eignen. Insbesondere die neuen Beschichtungen sollen in ihrer Chemikalienbeständigkeit, Witterungsbeständigkeit, Etchbeständigkeit, Kratzfestigkeit, Härte, Benetzung, Haftung und Schwitzwasserbeständigkeit sowie in ihrem Verlauf weiter verbessert sein.

Demgemäß wurde das neue Mehrkomponentensystem, zumindest umfassend
(I) mindestens eine Komponente, enthaltend
   (A) mindestens ein Oligomer und/oder Polymer, enthaltend im statistischen Mittel mindestens zwei Allophanatgruppen, Carbamatgruppen oder mindestens eine Carbamatgruppe und mindestens eine Allophanatgruppe,
   (B) mindestens ein Oligomer und/oder Polymer, enthaltend im statistischen Mittel mindestens zwei isocyanatreaktive funktionelle Gruppen,
   (C) mindestens ein partiell oder vollständig alkyliertes Aminoplastharz und
   (D) mindestens eine Verbindung, enthaltend im statistischen Mittel mindestens zwei mit aktinischer Strahlung aktivierbare Gruppen;
   und
(II) eine Komponente, enthaltend
   (E) mindestens ein Polyisocyanat,
mit der Maßgabe, dass
- das Äquivalentverhältnis von Isocyanatgruppen in der Komponente (II) zu isocyanatreaktiven funktionellen Gruppen in der Komponente (I) 0,2:1 bis 1:0,2 und
- das Äquivalentverhältnis von Allophanatgruppen und/oder Carbamatgruppen im Oligomer und/oder Polymer (A) zu den N-Methylolethergruppen oder den N-Methylol- und N-Methylolethergruppen im Aminoplastharz (C) 0,2:1 bis 1:0,2
beträgt.

Im Folgenden wird das neue Mehrkomponentensystem als »erfindungsgemäßes Mehrkomponentensystem« bezeichnet.

Außerdem wurde die Verwendung des erfindungsgemäßen Mehrkomponentensystems zur Herstellung der neuen, thermisch und mit aktinischer Strahlung härtbaren Mischung gefunden, die im Folgenden als »Triple-Cure-Mischung« bezeichnet wird.

Weitere Erfindungsgegenstände gehen aus der Beschreibung hervor.

Im Hinblick auf den Stand der Technik war es überraschend und für den Fachmann nicht vorhersehbar, dass die Aufgabe, wie der vorliegenden Erfindung zugrunde lag mit Hilfe des erfindungsgemäßen Mehrkomponentensystems und der Triple-Cure-Mischung gelöst werden konnte.

Insbesondere war es überraschend, dass sich das erfindungsgemäße Mehrkomponentensystem in seiner stofflichen Zusammensetzung außerordentlich breit variieren ließ, sodass Triple-Cure-Mischungen resultierten, die gezielt an den jeweiligen Verwendungszweck angepasst werden konnten und daher besonders vorteilhafte anwendungstechnische Eigenschaften aufwiesen.

Überraschenderweise wiesen die Triple-Cure-Mischungen eine vorteilhaft lange Verarbeitungszeit oder Topfzeit auf, wobei sie aber nach der Applikation sehr rasch ausgehärtet werden konnten.

Außerdem war es überraschend, dass die Triple-Cure-Mischungen hervorragend für die Herstellung von neuen Formteilen und Folien als Beschichtungsstoffe, Klebstoffe und Dichtungsmassen hervorragend für die Herstellung von Beschichtungen, Klebschichten und Dichtungen geeignet waren.

Vor allem lieferten die Triple-Cure-Mischungen Beschichtungen, die in ihrer Chemikalienbeständigkeit, Witterungsbeständigkeit, Schwitzwasserbeständigkeit, Etchbeständigkeit, Kratzfestigkeit, Härte, Benetzung und Haftung sowie in ihrem Verlauf den Beschichtungen des Standes der Technik überlegen waren.

Im Rahmen der vorliegenden Erfindung ist unter aktinischer Strahlung elektromagnetische Strahlung, wie nahes Infrarot (NIR), sichtbares Licht, UV-Strahlung, Röntgenstrahlung oder Gammastrahlung, insbesondere UV-Strahlung, und Korpuskularstrahlung, wie Elektronenstrahlung, Alphastrahlung, Betastrahlung oder Neutronenstrahlung, insbesondere Elektronenstrahlung, zu verstehen.

Außerdem werden im Rahmen der vorliegenden Erfindung unter Oligomeren Harze verstanden, die mindestens 2 bis 15 wiederkehrende Monomereinheiten in ihrem Molekül enthalten. Im Rahmen der vorliegenden Erfindung werden unter Polymeren Harze verstanden, die mindestens 10 wiederkehrende Monomereinheiten in ihrem Molekül enthalten. Ergänzend wird zu diesen Begriffen auf Römpp Lexikon Lacke und Druckfarben, Georg Thieme Verlag, Stuttgart, New York, 1998, »Oligomere«, Seite 425, verwiesen.

Das erfindungsgemäße Mehrkomponentensystem umfasst zumindest mindestens eine, insbesondere eine, Komponente (I) und mindestens eine, insbesondere eine Komponente (II). Somit handelt es sich bei der bevorzugten Ausführungsform des erfindungsgemäßen Mehrkomponentensystems um ein Zweikomponentensystem.

Die Komponenten (I) und (II) werden bis zur Verwendung des erfindungsgemäßen Mehrkomponentensystems, insbesondere zur Herstellung der Triple-Cure-Mischungen, getrennt voneinander gelagert, um eine vorzeitige Vernetzung zu verhindern.

Die Komponente (I) enthält mindestens ein, insbesondere ein, Oligomer und/oder Polymer (A), das im statistischen Mittel mindestens zwei, vorzugsweise mindestens drei und insbesondere mindestens vier Allophanatgruppen oder Carbamatgruppen oder mindestens eine Carbamatgruppe und mindestens eine Allophanatgruppe, vorzugsweise mindestens zwei Carbamatgruppen und mindestens zwei Allophanatgruppe, enthält.

Darüber hinaus können das Oligomer und das Polymer (A) auch isocyanatreaktive funktionelle Gruppen enthalten. Beispiele geeigneter isocyanatreaktiver funktioneller Gruppen sind Hydroxylgruppen, Thiolgruppen und primäre und sekundäre Aminogruppen, insbesondere Hydroxylgruppen. Vorzugsweise beträgt die ihre Menge bis zu 30 Äquivalent%, insbesondere bis zu 10 Äquivalent%, bezogen auf die im Oligomer und/oder Polymer (A) vorhandenen Allophanatgruppen und/oder Carbamatgruppen und isocyanatreaktiven funktionellen Gruppen.

Das Oligomer und Polymer (A) können den unterschiedlichsten Oligomer- und Polymerklassen entstammen. Beispiele geeigneter Oligomer- und Polymerklassen sind statistisch, alternierend und/oder blockartig aufgebaute lineare und/oder verzweigte und/oder kammartig aufgebaute Polyadditionsharze, Polykondensationsharze und (Co)Polymerisate von ethylenisch ungesättigten Monomeren, oder. Zu diesen Begriffen wird ergänzend auf Römpp Lexikon Lacke und Druckfarben, Georg Thieme Verlag, Stuttgart, New York, 1998, Seite 457, »Polyaddition« und »Polyadditionsharze (Polyaddukte)«, sowie Seiten 463 und 464, »Polykondensate«, »Polykondensation« und »Polykondensationsharze« verwiesen.

Beispiele gut geeigneter Polyadditionsharze und/oder Polykondensationsharze (A) sind Polyester, Alkyde, Polyurethane, Polylactone, Polycarbonate, Polyether, Epoxidharz-Amin-Addukte, Polyharnstoffe, Polyamide oder Polyimide.

Beispiele gut geeigneter (Co)Polymerisate (A) sind (Meth)Acrylat(co)polymerisate und Polyvinylester, insbesondere (Meth)Acrylat(co)polymerisate.

Allophanatgruppen enthaltende Oligomere und Polymere (A), die den vorstehend genannten Polymerklassen entstammen, sind aus der deutschen Patentanmeldung DE 198 39 453 A1, Seite 2, Zeile 65, bis Seite 6, Zeile 34, und Seite 7, Zeilen 25 bis 53, bekannt.

Carbamatgruppen enthaltenden Oligomere und Polymere (A), die den vorstehend genannten Polymerklassen entstammen, und Verfahren zu ihrer Herstellung sind aus den Patentanmeldungen
- EP 0 594 068 A1, Seite 2, Zeile 45, bis Seite 4, Zeile 27, Seite 5, Zeile 36 bis 57, und Seite 7, Zeilen 1 bis 22,
- EP 0 594 142 A1, Seite 3, Zeile 1, bis Seite 4, Zeile 37, Seite 5, Zeile 49, bis Seite 6, Zeile 12, und Seite 7, Zeilen 5 bis 26,
- EP 0 675 141 B1, Seite 2, Zeile 44, bis Seite 5, Zeile 15, Seite 8, Zeile 5, bis Seite 10, Zeile 41, und
- WO 94/10211, Seite 4, Zeile 18, bis Seite 8, Zeile 8, Seite 12, Zeile 30, bis Seite 14, Zeile 36, Seite 15, Zeile 35, bis Seite 17, Zeile 32, und Seite 18, Zeile 16, bis Seite 19, Zeile 30,
bekannt oder werden in der deutschen Patentanmeldung
- DE 199 46 048 A1
beschrieben.

Die Komponente (I) enthält des Weiteren mindestens ein, insbesondere ein, Oligomer und/oder Polymer (B), enthaltend im statistischen Mittel mindestens zwei, vorzugsweise mindestens drei und insbesondere mindestens vier der vorstehend beschriebenen isocyanatreaktiven funktionellen Gruppen, insbesondere Hydroxylgruppen.

Das Oligomer und das Polymer (B) können den vorstehend beschriebenen Polymerklassen entstammen. Vorzugsweise handelt es sich bei dem Oligomer und dem Polymer (B) um (Meth)Acrylat(co)polymerisate, insbesondere (Meth)Acrylatcopolymerisate.

Beispiele geeigneter olefinisch ungesättigter Monomere (b) für die Herstellung der (Meth)Acrylatcopolymerisate (B) sind
(b1) Monomere, welche mindestens eine Hydroxyl- oder Aminogruppe pro Molekül tragen, wie
   - Hydroxyalkylester der Acrylsäure, Methacrylsäure oder einer anderen alpha,beta-olefinisch ungesättigten Carbonsäure, die sich von einem Alkylenglykol ableiten, das mit der Säure verestert ist, oder die durch Umsetzung der alpha,beta-olefinisch ungesättigten Carbonsäure mit einem Alkylenoxid wie Ethylenoxid oder Propylenoxid erhältlich sind, insbesondere Hydroxyalkylester der Acrylsäure, Methacrylsäure, Ethacrylsäure, Crotonsäure, Maleinsäure, Fumarsäure oder Itaconsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutylacrylat, -methacrylat, - ethacrylat, -crotonat, -maleinat, -fumarat oder -itaconat; oder Hydroxycycloalkylester wie 1,4-Bis(hydroxymethyl)cyclohexan-, Octahydro-4,7-methano-1 H-inden-dimethanol- oder Methylpropandiolmonoacrylat, - monomethacrylat, -monoethacrylat, -monocrotonat, - monomaleinat, -monofumarat oder -monoitaconat; Umsetzungsprodukte aus cyclischen Estern, wie z.B. epsilon-Caprolacton und diesen Hydroxyalkyl- oder - cycloalkylestern;
   - olefinisch ungesättigte Alkohole wie Allylalkohol;
   - Polyole wie Trimethylolpropanmono- oder diallylether oder Pentaerythritmono-, -di- oder -triallylether;
   - Umsetzungsprodukte aus Acrylsäure und/oder Methacrylsäure mit dem Glycidylester einer in alpha-Stellung verzweigten Monocarbonsäure mit 5 bis 18 C-Atomen je Molekül, insbesondere einer Versatic®-Säure, oder anstelle des Umsetzungsproduktes eine äquivalenten Menge Acryl- und/oder Methacrylsäure, die dann während oder nach der Polymerisationsreaktion mit dem Glycidylester einer in alpha-Stellung verzweigten Monocarbonsäure mit 5 bis 18 C-Atomen je Molekül, insbesondere einer Versatic®-Säure, umgesetzt wird;
   - Aminoethylacrylat, Aminoethylmethacrylat, Allylamin oder N-Methyliminoethylacrylat; und/oder
   - Acryloxysilan-enthaltende Vinylmonomere, herstellbar durch Umsetzung hydroxyfunktioneller Silane mit Epichlorhydrin und anschließender Umsetzung des Reaktionsproduktes mit (Meth)acrylsäure und/oder Hydroxyalkyl- und/oder - cycloalkylestern der (Meth)Acrylsäure und/oder weiterer hydroxylgruppehaltiger Monomere (a1).
(b2) Monomere, welche mindestens eine Säuregruppe pro Molekül tragen, wie
   - Acrylsäure, beta-Carboxyethylacrylat, Methacrylsäure, Ethacrylsäure, Crotonsäure, Maleinsäure, Fumarsäure oder Itaconsäure;
   - olefinisch ungesättigte Sulfon- oder Phosphonsäuren oder deren Teilester;
   - Maleinsäuremono(meth)acryloyloxyethylester, Bernsteinsäuremono(meth)acryloyloxyethylester oder Phthalsäuremono(meth)acryloyloxyethylester; oder
   - Vinylbenzoesäure (alle Isomere), alpha-Methylvinylbenzoesäure (alle Isomere) oder Vinylbenzsolsulfonsäure (alle Isomere).
(b3) Monomere, die im wesentlichen oder völlig frei von reaktiven funktionellen Gruppen sind, wie:
   Monomere (b31):
      Im wesentlichen säuregruppenfreie (Meth)acrylsäureester wie (Meth)Acrylsäurealkyl- oder -cycloalkylester mit bis zu 20 Kohlenstoffatomen im Alkylrest, insbesondere Methyl-, Ethyl-, n-Propyl-, n-Butyl-, sec.-Butyl-, tert.-Butyl-, Hexyl-, Ethylhexyl-, Stearyl- und Laurylacrylat oder -methacrylat; cycloaliphatische (Meth)acrylsäureester, insbesondere Cyclohexyl-, Isobornyl-, Dicyclopentadienyl-, Octahydro-4,7-methano-1H-inden-methanol- oder tert.-Butylcyclohexyl(meth)acrylat; (Meth)Acrylsäureoxaalkylester oder -oxacycloalkylester wie Ethoxytriglykol(meth)acrylat und Methoxyoligoglykol(meth)acrylat mit einem Molekulargewicht Mn von vorzugsweise 550 oder andere ethoxylierte und/oder propoxylierte hydroxylgruppenfreie (Meth)Acrylsäurederivate (weitere Beispiele geeigneter Monomere (31) dieser Art sind aus der Offenlegungsschrift DE 196 25 773 A 1, Spalte 3, Zeile 65, bis Spalte 4, Zeile 20, bekannt). Diese können in untergeordneten Mengen höherfunktionelle (Meth)Acrylsäurealkyl- oder -cycloalkylester wie Ethylengylkol-, Propylenglykol-, Diethylenglykol-, Dipropylenglykol-, Butylenglykol-, Pentan-1,5-diol-, Hexan-1,6-diol-, Octahydro-4,7-methano-1H-inden-dimethanol- oder Cyclohexan-1,2-, -1,3- oder -1,4-diol-di(meth)acrylat; Trimethylolpropan-di- oder -tri(meth)acrylat; oder Pentaerythrit-di-, -tri- oder -tetra(meth)acrylat enthalten. Rahmen der vorliegenden Erfindung sind hierbei unter untergeordneten Mengen an höherfunktionellen Monomeren (b31) solche Mengen zu verstehen, welche nicht zur Vernetzung oder Gelierung der Copolymerisate führen, es sei denn, sie sollen in der Form von vernetzten Mikrogelteilchen vorliegen.
   Monomere (b32):
      Vinylester von in alpha-Stellung verzweigten Monocarbonsäuren mit 5 bis 18 C-Atomen im Molekül. Die verzweigten Monocarbonsäuren können erhalten werden durch Umsetzung von Ameisensäure oder Kohlenmonoxid und Wasser mit Olefinen in Anwesenheit eines flüssigen, stark sauren Katalysators; die Olefine können Crack-Produkte von paraffinischen Kohlenwasserstoffen, wie Mineralölfraktionen, sein und können sowohl verzweigte wie geradkettige acyclische und/oder cycloaliphatische Olefine enthalten. Bei der Umsetzung solcher Olefine mit Ameisensäure bzw. mit Kohlenmonoxid und Wasser entsteht ein Gemisch aus Carbonsäuren, bei denen die Carboxylgruppen vorwiegend an einem quaternären Kohlenstoffatom sitzen. Andere olefinische Ausgangsstoffe sind z.B. Propylentrimer, Propylentetramer und Diisobutylen. Die Vinylester können aber auch auf an sich bekannte Weise aus den Säuren hergestellt werden, z.B. indem man die Säure mit Acetylen reagieren läßt. Besonders bevorzugt werden - wegen der guten Verfügbarkeit - Vinylester von gesättigten aliphatischen Monocarbonsäuren mit 9 bis 11 C-Atomen, die am alpha-C-Atom verzweigt sind, eingesetzt. Vinylester dieser Art werden unter der Marke VeoVa® vertrieben (vgl. auch Römpp Lexikon Lacke und Druckfarben, Georg Thieme Verlag, Stuttgart, New York, 1998, Seite 598).
   Monomere (b33):
      Diarylethylene, insbesondere solche der allgemeinen Formel I:

         **R**^{**1**}**R**^{**2**}**C=CR**^{**3**}**R**^{**4**} (I),

         worin die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste stehen, mit der Maßgabe, dass mindestens zwei der Variablen R¹, R², R³ und R⁴ für substituierte oder unsubstituierte Aryl-, Arylalkyl- oder Arylcycloalkylreste, insbesondere substituierte oder unsubstituierte Arylreste, stehen. Beispiele geeigneter Alkylreste sind Methyl, Ethyl, Propyl, Isopropyl, n-Butyl, iso-Butyl, tert.-Butyl, Amyl, Hexyl oder 2-Ethylhexyl. Beispiele geeigneter Cycloalkylreste sind Cyclobutyl, Cyclopentyl oder Cyclohexyl. Beispiele geeigneter Alkylcycloalkylreste sind Methylencyclohexan, Ethylencyclohexan oder Propan-1,3-diyl-cyclohexan. Beispiele geeigneter Cycloalkylalkylreste sind 2-, 3- oder 4-Methyl-, -Ethyl-, -Propyl- oder -Butylcyclohex-1-yl. Beispiele geeigneter Arylreste sind Phenyl, Naphthyl oder Biphenylyl, vorzugsweise Phenyl und Naphthyl und insbesondere Phenyl. Beispiele geeigneter Alkylarylreste sind Benzyl oder Ethylen- oder Propan-1,3-diyl-benzol. Beispiele geeigneter Cycloalkylarylreste sind 2-, 3- oder 4-Phenylcyclohex-1-yl. Beispiele geeigneter Arylalkylreste sind 2-, 3- oder 4-Methyl-, -Ethyl-, -Propyl- oder -Butylphen-1-yl. Beispiele geeigneter Arylcycloalkylreste sind 2-, 3- oder 4-Cyclohexylphen-1-yl. Vorzugsweise handelt es sich bei den Arylresten R¹, R², R³ und/oder R⁴ um Phenyl- oder Naphthylreste, insbesondere Phenylreste. Die in den Resten R¹, R², R³ und/oder R⁴ gegebenenfalls vorhandenen Substituenten sind elektronenziehende oder elektronenschiebende Atome oder organische Reste, insbesondere Halogenatome, Nitril-, Nitro-, partiell oder vollständig halogenierte Alkyl-, Cycloalkyl-, Alkylcycloalkyl-, Cycloalkylalkyl-, Aryl-, Alkylaryl-, Cycloalkylaryl-Arylalkyl- und Arylcycloalkylreste; Aryloxy-, Alkyloxy- und Cycloalkyloxyreste; und/oder Arylthio-, Alkylthio- und Cycloalkylthioreste. Besonders vorteilhaft sind Diphenylethylen, Dinaphthalinethylen, cis- oder trans- Stilben oder Vinyliden-bis(4-nitrobenzol), insbesondere Diphenylethylen (DPE), weswegen sie bevorzugt verwendet werden. Im Rahmen der vorliegenden Erfindung werden die Monomeren (b33) eingesetzt, um die Copolymerisation in vorteilhafter Weise derart zu regeln, dass auch eine radikalische Copolymerisation in Batch-Fahrweise möglich ist.
   Monomere (b34):
      Vinylaromatische Kohlenwasserstoffe wie Styrol, Vinyltoluol, Diphenylethylen oder alpha-Alkylstyrole, insbesondere alpha-Methylstyrol.
   Monomere (b35):
      Nitrile wie Acrylnitril und/oder Methacrylnitril.
   Monomere (b36):
      Vinylverbindungen, insbesondere Vinyl- und/oder Vinylidendihalogenide wie Vinylchlorid, Vinylfluorid, Vinylidendichlorid oder Vinylidendifluorid; N-Vinylamide wie Vinyl-N-methylformamid, N-Vinylcaprolactam oder N-Vinylpyrrolidon; 1-Vinylimidazol; Vinylether wie Ethylvinylether, n-Propylvinylether, Isopropylvinylether, n-Butylvinylether, Isobutylvinylether und/oder Vinylcyclohexylether; und/oder Vinylester wie Vinylacetat, Vinylpropionat, Vinylbutyrat, Vinylpivalat und/oder der Vinylester der 2-Methyl-2-ethylheptansäure.
   Monomere (b37):
      Allylverbindungen, insbesondere Allylether und -ester wie Allylmethyl-, -ethyl-, -propyl- oder -butylether oder Allylacetat, - propionat oder -butyrat.
   Monomere (b38):
      Polysiloxanmakromonomere, die ein zahlenmittleres Molekulargewicht Mn von 1.000 bis 40.000 und im Mittel 0,5 bis 2,5 ethylenisch ungesättigte Doppelbindungen pro Molekül aufweisen; insbesondere Polysiloxanmakromonomere, die ein zahlenmittleres Molekulargewicht Mn von 2.000 bis 20.000, besonders bevorzugt 2.500 bis 10.000 und insbesondere 3.000 bis 7.000 und im Mittel 0,5 bis 2,5, bevorzugt 0,5 bis 1,5, ethylenisch ungesättigte Doppelbindungen pro Molekül aufweisen, wie sie in der DE 38 07 571 A 1 auf den Seiten 5 bis 7, der DE 37 06 095 A 1 in den Spalten 3 bis 7, der EP 0 358 153 B 1 auf den Seiten 3 bis 6, in der US 4,754,014 A 1 in den Spalten 5 bis 9, in der DE 44 21 823 A 1 oder in der internationalen Patentanmeldung WO 92/22615 auf Seite 12, Zeile 18, bis Seite 18, Zeile 10, beschrieben sind.
   Monomere (b39):
      Olefine wie Ethylen, Propylen, But-1-en, Pent-1-en, Hex-1-en, Cyclohexen, Cyclopenten, Norbonen, Butadien, Isopren, Cylopentadien und/oder Dicyclopentadien.
   und/oder
(b4) Epoxidgruppen enthaltende Monomere wie der Glycidylester der Acrylsäure, Methacrylsäure, Ethacrylsäure, Crotonsäure, Maleinsäure, Fumarsäure oder Itaconsäure oder Allylglycidylether.

Höherfunktionelle Monomere (b) der vorstehend beschriebenen Art werden im allgemeinen in untergeordneten Mengen eingesetzt. Im Rahmen der vorliegenden Erfindung sind unter untergeordneten Mengen an höherfunktionellen Monomeren solche Mengen zu verstehen, welche nicht zur Vernetzung oder Gelierung der (Meth)Acrylatcopolymerisate (B) führen, es sei denn, man will gezielt vernetzte polymere Mikroteilchen herstellen.

Die (Meth)Acrylatcopolymerisate (B) weisen je nach Verwendungszweck des erfindungsgemäßen Beschichtungsstoffs eine Glasübergangstemperatur von - 50 °C bis + 110, vorzugsweise - 30 bis + 80, bevorzugt - 15 bis + 70, besonders bevorzugt - 15 bis + 50, ganz besonders bevorzugt - 15 bis + 40 und insbesondere - 15 bis + 30 °C auf. Ihre Säurezahl richtet sich vor allem danach, ob sie in wäßrigen erfindungsgemäßen Beschichtungsstoffen eingesetzt werden sollen; vorzugsweise liegt die Säurezahl bei 5 bis 100 mg KOH/g. Ebenso kann ihr Gehalt an isocyanatreaktiven funktionellen Gruppen, insbesondere Hydroxylgruppen, breit variieren; vorzugsweise liegt ihre Hydroxylzahl bei 20 bis 300, bevorzugt 30 bis 250, besonders bevorzugt 40 bis 200, ganz besonders bevorzugt 60 bis 190 insbesondere 80 bis 180 mg KOH/g. Besondere Vorteile resultieren aus der Verwendung der Monomeren (b2) 2-Hydroxypropyl-, 3-Hydroxypropyl-, 3-Hydroxybutyl- und 4-Hydroxybutylacrylat und -methacrylat.

Beispiele geeigneter Herstellverfahren für (Meth)Acrylatcopolymerisate (B) werden in den europäischen Patentanmeldungen EP 0 767 185 A 1, den deutschen Patenten DE 22 14 650 B 1 oder DE 27 49 576 B 1 und den amerikanischen Patentschriften US 4,091,048 A 1, US 3,781,379 A 1, US 5,480,493 A 1, US 5,475,073 A 1 oder US 5,534,598 A 1 oder in dem Standardwerk Houben-Weyl, Methoden der organischen Chemie, 4. Auflage, Band 14/1, Seiten 24 bis 255, 1961, beschrieben. Als Reaktoren für die Copolymerisation kommen die üblichen und bekannten Rührkessel, Rührkesselkaskaden, Rohrreaktoren, Schlaufenreaktoren oder Taylorreaktoren, wie sie beispielsweise in der Patentschriften und den Patentanmeldungen DE 1 071 241 B 1, EP 0 498 583 A 1 oder DE 198 28 742 A 1 oder in dem Artikel von K. Kataoka in Chemical Engineering Science, Band 50, Heft 9, 1995, Seiten 1409 bis 1416, beschrieben werden, in Betracht.

Die vorstehend beschriebenen (Meth)Acrylatcopolymerisate (B) können bekanntermaßen der Herstellung der Oligomeren und Polymeren (A) dienen.

Außer den obligatorischen isocyanatreaktiven funktionellen Gruppen können das Oligomer und das Polymer (B) Allophanatgruppen und/oder Carbamatgruppen untergeordneten Mengen enthalten. Diese Gruppen liegen dann in einer untergeordnete Menge vor, wenn die Vernetzungseigenschaften des Oligomers und des Polymers (B) in erster Linie von den isocyanatreaktiven funktionellen Gruppen bestimmt werden. Vorzugsweise beträgt die untergeordnete Menge bis zu 30 Äquivalent%, insbesondere bis zu 10 Äquivalent%, bezogen auf die im Oligomer und/oder Polymer (B) vorhandenen Allophanatgruppen und/oder Carbamatgruppen und isocyanatreaktiven funktionellen Gruppen.

Ansonsten können die Oligomeren und Polymeren (A) und/oder (B) geringe Mengen der nachstehend beschriebenen, mit aktinischer Strahlung aktivierbaren Gruppen sowie von üblichen und bekannten, thermisch aktivierbaren, reaktiven funktionellen Gruppen, die keine isocyanatreaktiven funktionellen Gruppen, Carbamatgruppen und Allophanatgruppen sind, enthalten. Wesentlich ist, dass diese Gruppen die Vernetzungsreaktionen in den Triple-Cure-Mischungen nicht inhibieren oder vorzeitig initiieren. Vorzugsweise betragen die geringen Mengen bis zu 10 Äquivalent%, bezogen auf die in den Oligomeren und Polymeren (A) und/oder (B) vorhandenen reaktiven funktionellen Gruppen.

Darüber hinaus können die Oligomeren und Polymeren (A) und/oder (B) übliche und bekannte, (potenziell) kationische oder anionische, dispergierende funktionelle Gruppen enthalten, wenn die betreffenden Triple-Cure-Mischungen in Wasser oder wässrigen Medien dispergierbar sein sollen(vgl. Römpp Lexikon Lacke und Druckfarben, Georg Thieme Verlag, Stuttgart, New York, 1998, »Wasserdispergierbare Bindemittel«, Seite 619, und »Wasserlösliche Bindemittel«, Seite 626 und 625).

Vorzugsweise enthalten die Oligomeren und Polymeren (A) lediglich Carbamatgruppen oder Carbamatgruppen und Hydroxylgruppen.

Vorzugsweise enthalten die Oligomeren und Polymeren (B) lediglich Hydroxylgruppen sowie gegebenenfalls geringe Mengen an Carboxylgruppen.

Die Komponenten (I) enthält außerdem mindestens ein, insbesondere ein, partiell oder vollständig, insbesondere vollständig, alkyliertes Aminoplastharz (C). Vorzugsweise ist das Aminoplastharz (C) mit Methylgruppen und/oder n-Butylgruppen alkyliert.

Beispiele gut geeigneter Aminoplastharze (C) sind Melaminharze, Guanaminharze oder Harnstoffharze. Hierbei kann jedes für transparente Decklacke oder Klarlacke geeignete Aminoplastharz oder eine Mischung aus solchen Aminoplastharzen verwendet werden. Ergänzend wird auf Römpp Lexikon Lacke und Druckfarben, Georg Thieme Verlag, 1998, Seite 29, »Aminoharze«, und das Lehrbuch "Lackadditive" von Johan Bieleman, Wiley-VCH, Weinheim, New York, 1998, Seiten 242 ff., oder auf das Buch "Paints, Coatings and Solvents", second completely revised edition, Edit. D. Stoye und W. Freitag, Wiley-VCH, Weinheim, New York, 1998, Seiten 80 ff., verwiesen. Des weiteren kommen die üblichen und bekannten Aminoplastharze in Betracht, deren Methylol- und/oder Methoxymethylgruppen z. T. mittels Carbamat- oder Allophanatgruppen defunktionalisiert sind. Vernetzungsmittel dieser Art werden in den Patentschriften US 4 710 542 A 1 und EP 0 245 700 B 1 sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207, beschrieben.

Nicht zuletzt enthält die Komponenten (I) mindestens eine, insbesondere eine, Verbindung (D), enthaltend im statistischen Mittel mindestens zwei, vorzugsweise mindestens drei, bevorzugt mindestens vier und mindestens fünf mit aktinischer Strahlung aktivierbaren Gruppen. Die mit aktinischer Strahlung aktivierbaren Gruppen enthalten mindestens eine, insbesondere eine, mit aktinischer Strahlung aktivierbare Bindung.

Beispiele geeigneter mit aktinischer Strahlung aktivierbarer Bindungen sind Kohlenstoff-Wasserstoff-Einzelbindungen oder Kohlenstoff-Kohlenstoff-, Kohlenstoff-Sauerstoff-, Kohlenstoff-Stickstoff-, Kohlenstoff Phosphor- oder Kohlenstoff-Silizium-Einzelbindungen oder -Doppelbindungen oder Kohlenstoff- Kohlenstoff-Dreifachbindungen. Von diesen werden die Kohlenstoff-Kohlenstoff-Doppelbindungen und -Dreifachbindungen, insbesondere die Kohlenstoff-Kohlenstoff-Doppelbindungen ("Doppelbindungen"), bevorzugt angewandt.

Gut geeignete Doppelbindungen liegen beispielsweise in (Meth)Acrylat-, Ethacrylat-, Crotonat-, Cinnamat-, Vinylether-, Vinylester-, Ethenylarylen-, Dicyclopentadienyl-, Norbornenyl-, Isoprenyl-, Isoprenyl-, Isopropenyl-, Allyl- oder Butenylgruppen; Ethenylarylen-, Dicyclopentadienyl-, Norbornenyl-, Isoprenyl-, Isopropenyl-, Allyl- oder Butenylethergruppen oder Ethenylarylen-, Dicyclopentadienyl-, Norbornenyl-, Isoprenyl-, Isopropenyl-, Allyl- oder Butenylestergruppen vor.

Von diesen sind (Meth)Acrylatgruppen, insbesondere Acrylatgruppen, von besonderem Vorteil und werden deshalb erfindungsgemäß ganz besonders bevorzugt verwendet.

Die Verbindung (D) kann niedermolekular, oligomer oder polymer sein.

Beispiele geeigneter niedermolekularer, oligomerer und/oder polymerer Verbindung (D) im Detail in Römpp Lexikon Lacke und Druckfarben, Georg Thieme Verlag, Stuttgart, New York, 1998, »Reaktivverdünner« Seiten 491 und 492, in der deutschen Patentanmeldung DE 199 08 013 A 1, Spalte 6, Zeile 63, bis Spalte 8, Zeile 65, in der deutschen Patentanmeldung DE 199 08 018 A 1, Seite 11, Zeilen 31 bis 33, in der deutschen Patentanmeldung DE 198 18 735 A 1, Spalte 7, Zeilen 1 bis 35, oder dem deutschen Patent DE 197 09 467 C 1, Seite 4, Zeile 36, bis Seite 5, Zeile 56, beschrieben. Vorzugsweise werden Pentaerythrittetraacrylat, Dipentaerythritpentaacrylat und/oder aliphatische Urethanacrylate mit sechs Acrylatgruppen im Molekül eingesetzt.

Die Komponente (II) des erfindungsgemäßen Mehrkomponentensystems enthält mindestens ein Polyisocyanat (E) oder sie besteht hieraus. Vorzugsweise enthält sie mindestens zwei, insbesondere zwei, Polyisocyanate (E) oder sie besteht hieraus.

Als Polyisocyanate (E) kommen grundsätzlich alle der üblichen und bekannten, auf dem Lackgebiet verwendeten aliphatischen, cycloaliphatischen, aliphatisch-cycloaliphatischen, aromatischen, aliphatisch-aromatischen und/oder cycloaliphatisch-aromatischen Polyisocyanate und Polyisocyanataddukte in Betracht, welche auch als Lackpolyisocyanate bezeichnet werden.

Beispiele geeigneter Polyisocyanate (E) sind Isophorondiisocyanat (= 5-Isocyanato-1-isocyanatomethyl-1,3,3-trimethyl-cyclohexan), 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-(4-isocyanatobut-1-yl)-1,3,3-trimethyl-cyclohexan, 1-Isocyanato-2-(3-isocyanatoprop-1-yl)-cyclohexan, 1-Isocyanato-2-(3-isocyanatoeth-1-yl)cyclohexan, 1-Isocyanato-2-(4-isocyanatobut-1-yl)-cyclohexan, 1,2-Diisocyanatocyclobutan, 1,3-Diisocyanatocyclobutan, 1,2-Diisocyanatocyclopentan, 1,3-Diisocyanatocyclopentan, 1,2-Diisocyanatocyclohexan, 1,3-Diisocyanatocyclohexan, 1,4- Diisocyanatocyclohexan, Dicyclohexylmethan-2,4'-diisocyanat, Dicyclohexylmethan-4,4'-diisocyanat, flüssiges Dicyclohexylmethan-4,4'-diisocyanat eines trans/trans-Gehalts von bis zu 30 Gew.-%, vorzugsweise 25 Gew.-% und insbesondere 20 Gew.-%, das durch Phosgenierung von Isomerengemischen des Bis(4-aminocyclohexyl)methans oder durch fraktionierte Kristallisation von handelsüblichem Bis(4-isocyanatocyclohexyl)methan gemäß den Patentschriften DE 44 14 032 A 1, GB 1220717 A, DE 16 18 795 A 1 oder DE 17 93 785 A 1 erhältlich ist; Trimethylendiisocyanat, Tetramethylendiisocyanat, Pentamethylendiisocyanat, Hexamethylendiisocyanat, Ethylethylendiisocyanat, Trimethylhexandiisocyanat, Heptamethylendiisocyanat oder Diisocyanate, abgeleitet von Dimerfettsäuren, wie sie unter der Handelsbezeichnung DDI 1410 von der Firma Henkel vertrieben und in den Patentschriften WO 97/49745 A und WO 97/49747 A beschrieben werden, insbesondere 2-Heptyl-3,4-bis(9-isocyanatononyl)-1-pentyl-cyclohexan, 1,2-, 1,4- oder 1,3-Bis(isocyanatomethyl)cyclohexan, 1,2-, 1,4- oder 1,3-Bis(2-isocyanatoeth-1-yl)cyclohexan, 1,3-Bis(3-isocyanatoprop-1-yl)cyclohexan oder 1,2-, 1,4- oder 1,3-Bis(4-isocyanatobut-1-yl)cyclohexan, m-Tetramethylxylylendiisocyanat (= 1,3-Bis-(2-isocyanatoprop-2-yl)-benzol oder Toluylendiisocyanat.

Beispiele geeigneter Polyisocyanate (E) auf Basis der vorstehend beschriebenen Diisocyanate (E) sind isocyanatgruppenhaltige Polyurethanpräpolymere, die durch Reaktion von Polyolen mit einem Überschuß an mindestens einem der vorstehend beschriebenen Diisocyanate hergestellt worden sind, und/oder Isocyanurat-, Biuret-, Allophanat-, Iminooxadiazindion-, Urethan-, Harnstoff- und/oder Uretdiongruppen enthaltende Polyisocyanate. Bevorzugt werden (E) verwendet; die im statistischen Mittel 2 bis 5 Isocyanatgruppen pro Molekül und Viskositäten von 100 bis 10.000, vorzugsweise 100 bis 5000 mPas aufweisen. Außerdem können die Polyisocyanate in üblicher und bekannter Weise hydrophil oder hydrophob modifiziert sein.

Beispiele geeigneter Herstellungsverfahren sind beispielsweise aus dem Patentschriften CA 2,163,591 A, US 4,419,513 A, US 4,454,317 A, EP 0 646 608 A, US 4,801,675 A, EP 0 183 976 A1, DE 40 15 155 A1, EP 0 303 150 A1, EP 0 496 208 A1, EP 0 524 500 A1, EP 0 566 037 A1, US 5,258,482 A1, US 5,290,902 A1, EP 0 649 806 A1, DE 42 29 183 A1 oder EP 0 531 820 A1 bekannt.

Außerdem kommen die hochviskosen Polyisocyanate (E), wie sie in der deutschen Patentanmeldung DE 198 28 935 A1 beschrieben werden, oder die an ihrer Oberfläche durch Harnstoffbildung und/oder Blockierung desaktivierten Polyisocyanatspartikel gemäß den europäischen Patentanmeldungen EP 0 922 720 A1, EP 1 013 690 A1 und EP 1 029 879 A1 in Betracht.

Die Polyisocyanate (E) können mit üblichen und bekannten Blockierungsmitteln partiell blockiert sein. Die blockierten Isocyanatgruppen sollen allerdings nur in untergeordneten Mengen, vorzugsweise nur bis zu 50 Äquivalent%, bezogen auf die im Polyisocyanat (E) vorliegenden Isocyanatgruppen, vorhanden sein. Außerdem können die Polyisocyanate (E) mindestens eine der vorstehend beschriebenen, mit aktinischer Strahlung aktivierbaren Gruppen enthalten (vgl. die europäische Patentanmeldung EP 0 982 800 A 1). Wesentlich ist, dass noch genügend freie Isocyanatgruppen für die Vernetzung über die isocyanatreaktiven funktionellen Gruppen in der Komponenten (I) vorhanden sind.

Für das erfindungsgemäße Mehrkomponentensystem ist es wesentlich, dass
- das Äquivalentverhältnis von Isocyanatgruppen in der Komponente (II) zu isocyanatreaktiven funktionellen Gruppen in der Komponente (I) 0,2:1 bis 1:0,2, vorzugsweise 0,25:1 bis 1:0,25 und insbesondere 0,3:1 bis 1:0,3 und
- das Äquivalentverhältnis von Allophanatgruppen und/oder Carbamatgruppen im Oligomer und/oder Polymer (A) sowie gegebenenfalls im Oligomer und/oder Polymer (B) zu den N-Methylolethergruppen oder den N-Methylol- und N-Methylolethergruppen im Aminoplastharz (C) 0,2:1 bis 1:0,2, vorzugsweise 0,25:1 und insbesondere 0,3: 1 bis 1:0,3
beträgt.

Für das erfindungsgemäße Mehrkomponentensystem ist es von Vorteil, wenn das Äquivalentverhältnis von
- Isocyanatgruppen + N-Methylolethergruppen oder N-Methylol- und N-Methylolethergruppen (Vernetzungsmittelgruppen) zu
- isocyanatreaktiven funktionellen Gruppen + Allophanatgruppen und/oder Carbamatgruppen (Bindemittelgruppen)
bei 0,2:1 bis 1:0,2, vorzugsweise 0,25:1 bis 1:0,25 liegt.

Demnach wird die Zusammensetzung der Komponente (I) und der Komponente (II) sowie das Mengenverhältnis von Komponente (I) zu Komponente (II) so gewählt, dass sich die gewünschten Äquivalentverhältnisse einstellen. Mengenmäßig kann daher der Gehalt der Bestandteile in den Komponenten (I) und (II) sowie deren Mengenverhältnis breit variieren.

Vorzugsweise enthält die Komponente (I)
- 5 bis 30, bevorzugt 10 bis 28 und insbesondere 15 bis 25 Gew.-% (A),
- 5 bis 30, bevorzugt 10 bis 28 und insbesondere 15 bis 25 Gew.-% (B),
- 1 bis 10, bevorzugt 2 bis 8 und insbesondere 3 bis 7 Gew.-% (C)
- 20 bis 70, bevorzugt 25 bis 65 und insbesondere 30 bis 60 Gew.-% (D),
jeweils bezogen auf den Festkörper der Komponente (I).

Vorzugsweise enthält die Komponente (II), bezogen auf den Festkörper, 50 bis 100, insbesondere 60 bis 100 Gew.-% Polyisocyanats (E).

Der »Festkörper« einer Komponente (I) oder (II) oder einer Triple-Cure-Mischung wird von allen nichtflüchtigen Bestandteilen gebildet, die nach der Aushärtung den Festkörper eines Formteils, einer Folie, einer Beschichtung, einer Klebschicht oder einer Dichtung aufbauen.

Das erfindungsgemäße Mehrkomponentensystem kann mindestens einen üblichen und bekannten Zusatzstoff (F) üblichen und bekannten, wirksamen Mengen enthalten.

Beispiele geeigneter Zusatzstoffe (F) sind organische und anorganische, farbige und unbunte, optisch effektgebende, elektrisch leitfähige, magnetisch abschirmende und fluoreszierende Pigmente, transparente und opake, organische und anorganische Füllstoffe, Nanopartikel, von den Bindemitteln (A) und (B) verschiedene, oligomere und polymere Bindemittel, von den Vernetzungsmitteln (C) und (B) verschiedene Vernetzungsmittel, niedrigsiedende und/oder hochsiedende ("lange") organische Lösemittel, UV-Absorber, Lichtschutzmittel, Radikalfänger, Photoinitiatoren, thermolabile radikalische Initiatoren, Vernetzungskatalysatoren, Entlüftunsmittel, Slipadditive, Polymerisationsinhibitoren, Entschäumer, Emulgatoren, Netzmittel, Haftvermittler, Verlaufmittel, Filmbildehilfsmittel, sag control agents (SCA), rheologiesteuernde Additive, Flammschutzmittel und Mattierungsmittel.

Bis auf die organische Lösemittel sind die Zusatzstoffe (F) vorzugsweise nur in der Komponente (I) enthalten.

Die Herstellung der Komponenten (I) und (II) erfolgt vorzugsweise durch Vermischen der vorstehend beschriebenen Bestandteile in geeigneten Mischaggregaten wie Rührkessel, Rührwerksmühlen, Extruder, Kneter, Ultraturrax, In-line-Dissolver, statische Mischer, Mikromischer, Zahnkranzdispergatoren, Druckentspannungsdüsen und/oder Microfluidizer. Vorzugsweise wird hierbei unter Ausschluss von Licht einer Wellenlänge λ < 550 nm oder unter völligem Ausschluss von Licht gearbeitet, um eine vorzeitige Vernetzung der Komponente (I) und gegebenenfalls einer mit aktinischer Strahlung aktivierbaren Komponente (II) zu verhindern.

Das erfindungsgemäße Mehrkomponentensystem die der Herstellung von Triple-Cure-Mischungen. Dabei werden mindestens eine Komponente (I) und mindestens eine Komponente (II) miteinander vermischt, wonach man die resultierende Mischung homogenisiert. Es können die vorstehend beschriebenen Mischaggregate und Verfahren angewandt werden. Auch hier empfiehlt es sich, unter Ausschluss von aktinischer Strahlung zu arbeiten, um eine vorzeitige Vernetzung der Triple-Cure-Mischungen zu verhindern.

Die Triple-Cure-Mischungen dienen der Herstellung von thermisch und mit aktinischer Strahlung gehärteten Massen, insbesondere von Formteilen und Folien, Beschichtungen, Klebschichten und Dichtungen.

Zur Herstellung der erfindungsgemäßen Formteile und Folien werden die Triple-Cure-Mischungen auf übliche und bekannte temporäre oder permanente Substrate appliziert. Vorzugsweise werden für die Herstellung der erfindungsgemäßen Folien und Formteile übliche und bekannte temporäre Substrate verwendet, wie Metall- und Kunststoffbänder oder Hohlkörper aus Metall, Glas, Kunststoff, Holz oder Keramik, die leicht entfernt werden können, ohne dass die erfindungsgemäßen Folien und Formteile beschädigt werden.

Werden die Triple-Cure-Mischungen als Beschichtungsstoffen, Klebstoffe und Dichtungsmassen für die Herstellung von Beschichtungen, Klebschichten und Dichtungen verwendet, werden permanente Substrate eingesetzt, wie Fortbewegungsmittel, inklusive Fluggeräte, Schiffe, Schienenfahrzeuge, Muskelkraft betriebene Fahrzeuge und Kraftfahrzeuge, und Teile hiervon, Bauwerke im Innen- und Außenbereich und Teile hiervon, Türen, Fenster und Möbel sowie im Rahmen der industriellen Lackierung Substrate wie Glashohlkörper, Coils, Container, Emballagen, industrielle Kleinteile, wie Muttern, Schrauben oder Radkappen, optische Bauteile, elektrotechnische Bauteile, wie Wickelgüter, inklusive Spulen und Statoren und Rotoren für Elektromotoren, mechanische Bauteile und Bauteile für weiße Ware, inklusive Haushaltsgeräte, Heizkessel und Radiatoren. Die erfindungsgemäßen Folien und Formteile können ebenfalls als Substrate dienen.

Methodisch weist die Applikation der Triple-Cure-Mischungen keine Besonderheiten auf, sondern kann durch alle üblichen und bekannten Applikationsmethoden, wie z.B. Spritzen, Sprühen, Rakeln, Streichen, Gießen, Tauchen, Träufeln oder Walzen erfolgen. Bei der Applikation empfiehlt es sich, unter Ausschluss von aktinischer Strahlung zu arbeiten, um eine vorzeitige Vernetzung der Triple-Cure-Mischungen zu vermeiden.

Vorzugsweise werden die applizierten Triple-Cure-Mischungen mit UV-Strahlung gehärtet. Bevorzugt wird bei der Bestrahlung eine Strahlendosis von 100 bis 6.000, vorzugsweise 200 bis 3.000, bevorzugt 300 bis 2.000 und besonders bevorzugt 500 bis 1.800 mJcm⁻² eingesetzt, wobei der Bereich < 1.700 mJcm⁻² ganz besonders bevorzugt ist.

Dabei kann die Strahlenintensität breit variieren. Sie richtet sich insbesondere nach der Strahlendosis einerseits und der Bestrahlungsdauer andererseits. Die Bestrahlungsdauer richtet sich bei einer vorgegebenen Strahlendosis nach der Band- oder Vorschubgeschwindigkeit der Substrate in der Bestrahlungsanlage und umgekehrt. Vorzugsweise wird die Strahlendosis mit einem Dosimeter Light Bug ® IL 390 C der Firma International Light gemessen.

Als Strahlenquellen für die UV-Strahlung können alle üblichen und bekannten UV-Lampen verwendet werden. Es kommen auch Blitzlampen in Betracht. Vorzugsweise werden als UV-Lampen Quecksilberdampflampen, bevorzugt Quecksilbernieder-, -mittel- und -hochdruckdampflampen, insbesondere Quecksilbermitteldruckdampflampen, verwendet. Besonders bevorzugt werden unmodifizierte Quecksilberdampflampen plus geeignete Filter oder modifizierte, insbesondere dotierte, Quecksilberdampflampen verwendet.

Bevorzugt werden galliumdotierte und/oder eisendotierte, insbesondere eisendotierte, Quecksilberdampflampen verwendet, wie sie beispielsweise in R. Stephen Davidson, »Exploring the Science, Technology and Applications of U.V. and E.B. Curing«, Sita Technology Ltd., London, 1999, Chapter I, »An Overview«, Seite 16, Figure 10, oder Dipl.-Ing. Peter Klamann, »eltosch System-Kompetenz, UV-Technik, Leitfaden für Anwender«, Seite 2, Oktober 1998, beschrieben werden.

Beispiele geeigneter Blitzlampen sind Blitzlampen der Firma VISIT.

Der Abstand der UV-Lampen von den applizierten erfindungsgemäßen Massen kann überraschend breit variieren und daher sehr gut auf die Erfordernisse des Einzelfalls eingestellt werden. Vorzugsweise liegt der Abstand bei 2 bis 200, bevorzugt 5 bis 100, besonders bevorzugt 10 bis 50 und insbesondere 15 bis 30 cm. Deren Anordnung kann außerdem den Gegebenheiten des Substrats und der Verfahrensparameter angepasst werden. Bei kompliziert geformten Substraten, wie sie für Automobilkarosserien vorgesehen sind, können die nicht direkter Strahlung zugänglichen Bereiche (Schattenbereiche), wie Hohlräume, Falzen und andere konstruktionsbedingte Hinterschneidungen, mit Punkt-, Kleinflächen- oder Rundumstrahlern, verbunden mit einer automatischen Bewegungseinrichtung für das Bestrahlen von Hohlräumen oder Kanten, ausgehärtet werden.

Die Bestrahlung kann unter einer sauerstoffabgereicherten Atmosphäre durchgeführt. "Sauerstoffabgereichert" bedeutet, dass der Gehalt der Atmosphäre an Sauerstoff geringer ist als der Sauerstoffgehalt von Luft (20,95 Vol.-%). Die Atmosphäre kann im Grunde auch sauerstofffrei sein, d. h., es handelt sich um ein Inertgas. Wegen der fehlenden inhibierenden Wirkung von Sauerstoff kann dies aber eine starke Beschleunigung der Strahlenhärtung bewirken, wodurch Inhomogenitäten und Spannungen in den erfindungsgemäßen gehärteten Massen entstehen können. Es ist daher von Vorteil, den Sauerstoffgehalt der Atmosphäre nicht auf Null Vol.-% abzusenken.

Die thermische Härtung kann beispielsweise mit Hilfe eines gasförmigen, flüssigen und/oder festen, heißen Mediums, wie heiße Luft, erhitztes Öl oder erhitzte Walzen, oder mit Hilfe von Mikrowellenstrahlung, Infrarotlicht und/oder nahem Infrarotlicht (NIR) erfolgen. Vorzugsweise erfolgt das Erhitzen in einem Umluftofen oder durch Bestrahlen mit IR- und/oder NIR-Lampen. Wie bei der Härtung mit aktinischer Strahlung kann auch die thermische Härtung stufenweise erfolgen. Vorteilhafterweise erfolgt die thermische Härtung bei Temperaturen von Raumtemperatur bis 200°C.

Sowohl die thermische Härtung als auch die Härtung mit aktinischer Strahlung können stufenweise durchgeführt werden. Dabei können sie hintereinander (sequenziell) oder gleichzeitig erfolgen. Erfindungsgemäß ist die sequenzielle Härtung von Vorteil und wird deshalb bevorzugt verwendet. Es ist dabei von besonderem Vorteil, die thermische Härtung nach der Härtung mit aktinischer Strahlung durchzuführen.

Die resultierenden erfindungsgemäßen Folien, Formteile, Beschichtungen, Klebschichten und Dichtungen eignen sich hervorragend für das Beschichten, Imprägnieren, Verkleben, Abdichten, Umhüllen und Verpacken von Fortbewegungsmitteln, inklusive Fluggeräte, Schiffe, Schienenfahrzeuge, mit Muskelkraft betriebene Fahrzeuge und Kraftfahrzeuge, sowie Teilen hiervon, von Bauwerken im Innen- und Außenbereich und Teilen hiervon, von Möbeln, von Türen, von Fenstern sowie im Rahmen der industrielle Lackierung von Glashohlkörpern, Coils, Container und Emballagen, von mechanischen, optischen und elektrischen Bauteilen und von weißer Ware, inklusive Haushaltsgeräte, Heizkessel und Radiatoren.

Vor allem aber werden die Triple-Cure-Mischungen als Beschichtungsstoffe, vorzugsweise Füller, Grundierungen, Basislacke, Decklacke oder Klarlacke, bevorzugt als Decklacke oder Klarlacke, insbesondere als Klarlacke zur Herstellung farb- und/oder effektgebender, elektrisch leitfähiger, magnetisch abschirmender oder fluoreszierender Mehrschichtlackierungen, speziell farb- und/oder effektgebender Mehrschichtlackierungen, eingesetzt. Für die Herstellung der Mehrschichtlackierungen können übliche und bekannte Nass-in-nass-Verfahren und Lackaufbauten angewandt werden.

Bei den resultierenden erfindungsgemäßen Klarlackierungen handelt es sich um die äußersten Schichten der Mehrschichtlackierungen, die wesentlich den optischen Gesamteindruck (Appearance) bestimmen und die farb- und/oder effektgebenden Schichten vor mechanischer und chemischer Schädigung und Schädigung durch Strahlung schützen. Deswegen machen sich auch Defizite in der Härte, Kratzfestigkeit, Chemikalienbeständigkeit, Witterungsbestädigkeit, Etchbeständigkeit, Benetzung, Haftung, Schwitzwasserbeständigkeit und der Stabilität gegenüber Vergilbung sowie im Verlauf bei der Klarlackierung besonders stark bemerkbar. So aber weisen die erfindungsgemäßen Klarlackierungen nur eine geringe Vergilbung auf. Sie sind hoch kratzfest, chemikalienbeständig, witterungsbeständig, etchbeständig, haftfest, schwitzwasserbeständig, hart und haftfest und zeigen nach dem Zerkratzen nur sehr geringe Glanzverluste. Nicht zuletzt haben sie einen besonders guten Verlauf.

Die erfindungsgemäßen Substrate, die mit erfindungsgemäßen Beschichtungen beschichtet, mit erfindungsgemäßen Klebschichten verklebt, mit erfindungsgemäßen Dichtung abgedichtet und/oder mit erfindungsgemäßen Folien und/oder Formteilen umhüllt oder verpackt sind, weisen daher hervorragende Dauergebrauchseigenschaften und eine besonders lange Gebrauchsdauer auf.

### Beispiele

### Herstellbeispiel 1

### Die Herstellung eines Carbamatgruppen enthaltenden Methacrylatcopolymerisats (A)

In einem Reaktor, ausgerüstet mit einem Rührer, einer Ölheizung, zwei Tropftrichtern, einem Stickstoffeinleitungsrohr, einem Thermometer und einem Rückflußkühler, wurden 326,1 Gewichtsteile Gewichtsteile Methylcarbamat, 489,8 Gewichtsteile Xylol und 482,6 Gewichtsteile Cardura ® E 10 (Glycidylester der Versatic ®-Säure der Firma Shell) vorgelegt und unter Rühren auf 140 °C erhitzt. Nach Erreichen dieser Temperatur wurden eine Monomermischung aus 434,6 Gewichtsteilen Hydroxymethylmethacrylat, 119 Gewichtsteilen Styrol und 163,6 Gewichtsteilen Methacrylsäure innerhalb von drei Stunden und eine Initiatorlösung aus 72 Gewichtsteilen Vazo ® 67 (2,2'-Azobis[2-methylbutanonnitril] der Firma Du Pont) und 181,9 Gewichtsteile Xylol während drei Stunden gleichmäßig zur Vorlage hinzudosiert. Mit den beiden Zuläufen wurde gleichzeitig begonnen. Nach der Beendigung der Zuläufe wurde die Reaktionsmischung während 30 Minuten auf 115 °C gekühlt. Anschließend wurde eine Initiatorlösung aus 12,1 Gewichtsteilen 2,2'-Azobis[2-methylbutanonnitril] und 36,9 Gewichtsteile Xylol während einer Stunde zur Reaktionsmischung dosiert, wonach man die Reaktionsmischung eine weitere Stunde bei 115 °C hielt. Nach Zugabe von 2,8 Gewichtsteilen Fascat ® 4100 (Monobutylzinnoxid der Firma Atochem) in 31,3 Gewichtsteilen Cyclohexan wurde die Reaktionsmischung unter Rühren auf 140 °C erwärmt und solange bei dieser Temperatur gehalten, bis die Hydroxylzahl bei 77 mg KOH/g Festkörper lag. Anschließend wurde die Reaktionsmischung auf 100 °C gekühlt und mit 25 Gewichtsteilen Methylisobutylketon und 125 Gewichtsteilen Xylol verdünnt. Unumgesetztes Methylcarbamat und das Cyclohexan wurden unter Vakuum bei 130 °C abdestilliert, bis der Methylcarbamatgehalt < 2 Gew.-% betrug. Nach dem Abkühlen auf 80 °C wurde die Reaktionsmischung mit 125 Gewichtsteilen Methoxypropanol verdünnt. Die resultierende Lösung des Carbamatgruppen enthaltenden Methacrylatcopolymerisats (A) wies einen Festkörpergehalt von 70 Gew.-% (60 Minuten Umluftofen/130 °C), eine Säurezahl von 1 bis 4 mg KOH/g Festkörper und einer Farbzahl von 4 bis 5 (Gardner) auf.

### Herstellbeispiel 2

### Die Herstellung eines Methacrylatcopolymerisats (B)

In einem geeigneten Reaktor, ausgerüstet mit einem Rührer, zwei Tropftrichtern für die Monomermischung und die Initiatorlösung, Stickstoffeinleitungsrohr, Thermometer, Heizung und Rückflußkühler, wurde 650 Gewichtsteile einer Fraktion aromatischer Kohlenwasserstoffe mit einem Siedebereich von 158 bis 172 °C eingewogen. Das Lösemittel wurde auf 140 °C erhitzt. Hiernach wurden eine Monomermischung aus 652 Gewichtsteilen Ethylhexylacrylat, 383 Gewichtsteilen 2-Hydroxyethylmethacrylat, 143 Gewichtsteilen Styrol, 212 Gewichtsteilen 4-Hydroxybutylacrylat und 21 Gewichtsteile Acrylsäure innerhalb von vier Stunden und eine Initiatorlösung aus 113 Gewichtsteilen des aromatischen Lösemittels und 113 Gewichtsteilen tert.-Butylperethylhexanoat innerhalb von 4,5 Stunden gleichmäßig in die Vorlage zudosiert. Mit der Dosierung der Monomermischung und der Initiatorlösung wurde gleichzeitig begonnen. Nach der Beendigung des Initiatorzulaufs wurde die resultierende Reaktionsmischung während weiterer zwei Stunden auf 140 °C unter Rühren erhitzt und anschließend abgekühlt. Die resultierende Lösung des Methacrylatcopolymerisats (A) wurde mit einem Gemisch aus 1-Methoxypropylacetat-2, Butylglykolacetat und Butylacetat verdünnt.

Die resultierende Lösung wies einen Festkörpergehalt von 65 Gew.-%, bestimmt in einem Umluftofen (eine Stunde/130 °C), eine Säurezahl von 15 mg KOH/g Festkörper, eine OH-Zahl von 175 mg KOH/g Festkörper und eine Glasübergangstemperatur von -21°C auf.

### Herstellbeispiel 3

### Die Herstellung einer Komponente (II)

In einem geeigneten Edelstahlreaktor wurden 26,5 Gewichtsteile Desmodur ® Z4470 (Isophorondiisocyanat der Firma BAYER Aktiengesellschaft) und 61,8 Gewichtsteile Basonat ® HI 190 B/S (Isocyanurat auf der Basis von Hexamethylendiisocyanat der Firma BASF-Aktiengesellschaft) mit 5,85 Gewichtsteile Solventnaphtha ® und 5,85 Gewichtsteile Butylacetat eingewogen und vermischt.

### Beispiel 1

### Die Herstellung einer Triple-Cure-Mischung

Die Triple-Cure-Mischung wurde durch Vermischen von 100 Gewichtsteilen der Komponente (I) und von 26 Gewichtsteilen der Komponente (II) gem. Herstellbeispiel 3 und Homogenisieren der resultierende Mischung hergestellt.

Die Kompenente (I) wurde durch Vermischen der folgenden Bestandteile:
- 19,90 Gewichtsteile der Methacrylatcopolymerisatlösung (A),
- 21,00 Gewichtsteile der Lösung des Methacrylatcopolymerisats (B),
- 3,8 Gewichtsteile Resimene ® BM-9539 (handelsübliches methyl- und butylverethertes Melaminharz der Firma Monsanto) als Aminoplastharz (C),
- 1,3 Gewichtsteile Nacure ® 5528 (handelsüblicher Katalysator, mit Aminen blockiertes Sulfonsäurederivat der Firma King),
- 0,3 Gewichtsteile Byk ® 358 (Solvent Naphtha-haltiges Additiv, 30prozentige Lösung eines handelsüblichen Netzmittels der Firma Byk Chemie),
- 1,15 Gewichtsteile Tinuvin ® 400 (Triazin-haltiges Lichtschutzmittel der Firma Ciba Specialty Chemicals)
- 1,00 Gewichtsteile Tinuvin ® 292 (HALS-Lichtschutzmittel der Firma Ciba Specialty Chemicals),
- 20,05 Gewichtsteile Butylacetat,
- 30 Gewichtsteile Sartomer ® 399 (Dipentaerythritpentaacrylat),
- 1,00 Gewichtsteile Irgacure ® 184 (handelsüblicher Photoinitiator),
- 0,50 Gewichtsteile Lucirin ® TPO (handelsüblicher Photoinitiator, Trimethylbenzoyldiphenylphosphinoxid der Firma BASF Aktiengesellschaft).
und Homogenisieren der resultierende Mischung mit einem Dissolver hergestellt.

Die Triple-Cure-Mischung wies eine vorteilhaft lange Verarbeitungszeit oder Topfzeit auf und ließ sich problemlos applizieren.

### Beispiel 2

### Die Herstellung einer farbgebenden Mehrschichtlackierung

Die Triple-Cure-Mischung gemäß Beispiel 1 wurde als Klarlack zur Herstellung einer farbgebenden Mehrschichtlackierung verwendet.

Zur Herstellung der Mehrschichtlackierung wurden Prüftafeln aus Stahl, die mit einer Elektrotauchlackierung einer Trockenschichtdicke von 18 bis 22 µm beschichtet waren, mit einem Wasserfüller beschichtet. Die resultierende Wasserfüllerschicht wurde während 20 Minuten bei 160°C eingebrannt, so dass eine Füllerlackierung mit einer Trockenschichtdicke von 35 bis 40 µm resultierte. Die Füllerlackierung wurde anschließend mit einem schwarzen Wasserbasislack der Firma BASF Coatings AG beschichtet, sodass nach der Härtung einer Basislackierung mit einer Trockenschichtdicke von 12 bis 15 µm resultierte. Die resultierenden Wasserbasislackschichten wurden während 10 Minuten bei 80°C abgelüftet. Die Wasserbasislackschichten wurden mit dem Klarlack beschichtet, sodass nach der Härtung eine Klarlackierung einer Trockenschichtdicke von 40 ± 10 µm resultierte. Die Härtung der Wasserbasislackschichten und der Klarlackschichten erfolgte zunächst thermisch während 5 Minuten bei Raumtemperatur und dann während 10 Minuten bei 80 °C, anschließend durch Bestrahlung mit UV-Strahlung aus einem Abstand von 20 cm in einer IST UV-Bandanlage mit 3,3 m/s mit einer Leistung von 1500 - 1600 mJ/cm² und abschließend thermisch während 20 Minuten bei 140 °C.

Für die Prüfung des Verlaufs wurde der Klarlack elektrostatisch vertikal und horizontal auf die Prüftafeln appliziert. Verwendet wurde eine Eco-Bell-Glocke mit Direktaufladung. Der Verlauf wurde visuell als besonders gut beurteilt.

Zur Bestimmung der Kratzfestigkeit bzw. des Glanzes wurden die beschichteten Prüftafeln mittels des Sandtests nach DIN 67530 nach einem Tag der Alterung überprüft. Der Anfangsglanz betrug 88,8, der Restglanz nach der Beendigung des Tests 76,8. Die Glanzdifferenz betrug somit 12,0, was die sehr hohe Kratzfestigkeit der Beschichtung zeigte.

Die Benetzung und Haftung des Klarlacks wurde mittels der Gitterschnittprüfung gemäß DIN ISO 2409:1994-10 überprüft. Die behandelten Prüftafeln zeigten Gitterschnitt-Kennwerte von GT 0 oder GT 1, was die sehr gute Benetzung und Zwischenschichthaftung untermauerte.

Zur Bewertung der Schwitzwasserbeständigkeit des Klarlacks wurden die Prüftafeln einem Schwitzwasser-Konstantklima Test (SKK-Test) nach DIN 50017 und 53209 nach drei Tagen Alterung unterzogen. Die Mehrschichtlackierungen zeigten keine Vermattung und kein Anquellen. Es wurden Bläschenbildungs-Kennwerte von m 2/g 1 erhalten. Die behandelten Prüftafeln zeigten nach 3 Stunden im SKK-Test immer noch Gitterschnitt-Kennwerte von GT 0 oder GT 1.

Ferner wurden die Microeindringhärten mit einem Fischerscope H100V bei einer Auflagekraft von 25,6 mN bestimmt. Man erhielt eine Universalhärte von 182,9 N/mm² bei einer Standardabweichung von 3,2 und einer mittleren Eindringtiefe von 2,3 µm.

Bei dem in der Fachwelt bekannten Gradientenofen-Chemikalientest zeigte die Mehrschichtlackierung nach 24 Stunden Exposition gegenüber Baumharz, NaOH, Pankreatin und Schwefelsäure erst oberhalb von 75 °C, bei 43 °C, bei 60 °C und bei 50 °C eine Beschädigung.

## Patentansprüche

1. Mehrkomponentensystem, zumindest umfassend
(I) mindestens eine Komponente, enthaltend
(A) mindestens ein Oligomer und/oder Polymer, enthaltend im statistischen Mittel mindestens zwei Allophanatgruppen, Carbamatgruppen oder mindestens eine Carbamatgruppe und mindestens eine Allophanatgruppe,
(B) mindestens ein Oligomer und/oder Polymer, enthaltend im statistischen Mittel mindestens zwei isocyanatreaktive funktionelle Gruppen,
(C) mindestens ein partiell oder vollständig alkyliertes Aminoplastharz und
(D) mindestens eine Verbindung, enthaltend im statistischen Mittel mindestens zwei mit aktinischer Strahlung aktivierbare Gruppen;
und
(II) mindestens eine Komponente, enthaltend
(E) mindestens ein Polyisocyanat,
mit der Maßgabe, dass
- das Äquivalentverhältnis von Isocyanatgruppen in der Komponente (II) zu isocyanatreaktiven funktionellen Gruppen in der Komponente (I) 0,2:1 bis 1:0,2 und
- das Äquivalentverhältnis von Allophanatgruppen und/oder Carbamatgruppen im Oligomer und/oder Polymer (A) zu den N-Methylolethergruppen oder den N-Methylol- und N-Methylolethergruppen im Aminoplastharz (C) 0,2:1 bis 1:0,2
beträgt.

2. Mehrkomponentensystem nach Anspruch 1, **dadurch gekennzeichnet, dass** das Äquivalentverhältnis von
- Isocyanatgruppen + N-Methylolethergruppen oder N-Methylol- und N-Methylolethergruppen (Vernetzungsmittelgruppen) zu
- isocyanatreaktiven funktionellen Gruppen + Allophanatgruppen und/oder Carbamatgruppen (Bindemittelgruppen)
bei 0,2:1 bis 1:0,2 liegt.

3. Mehrkomponentensystem nach Anspruch 2, **dadurch gekennzeichnet, dass** das Äquivalentverhältnis von Vernetzungsmittelgruppen zu Bindemittelgruppen 0,25:1 bis 1:0,25 beträgt.

4. Mehrkomponentensystem nach einem der Ansprüche 1 bis 3, **dadurch gekennzeichnet, dass** das Äquivalentverhältnis von Isocyanatgruppen in der Komponente (II) zu isocyanatreaktiven funktionellen Gruppen in der Komponente (I) 0,3:1 bis 1:0,3 beträgt.

5. Mehrkomponentensystem nach einem der Ansprüche 1 bis 4, **dadurch gekennzeichnet, dass** das Äquivalentverhältnis von Allophanatgruppen und/oder Carbamatgruppen im Oligomer und/oder Polymer (A) zu den N-Methylolethergruppen oder den N-Methylol- und N-Methylolethergruppen im Aminoplastharz (C) 0,3:1 bis 1:0,3 beträgt.

6. Mehrkomponentensystem nach einem der Ansprüche 1 bis 5, **dadurch gekennzeichnet, dass** die Oligomeren und Polymeren (A) und (B) aus der Gruppe, bestehend aus statistisch, alternierend und blockartig aufgebauten, linearen und verzweigten und kammartig aufgebauten Polyadditionsharzen, Polykondensationsharzen sowie (Co)Polymerisaten von ethylenisch ungesättigten Monomeren, ausgewählt werden.

7. Mehrkomponentensystem nach Anspruch 6, **dadurch gekennzeichnet, dass** die Polyadditionsharze und Polykondensationsharze aus der Gruppe, bestehend aus Polyestern, Alkyden, Polyurethanen, Polylactonen, Polycarbonaten, Polyethern, Epoxidharz-Amin-Addukten, Polyharnstoffen, Polyamiden und Polyimiden, und die (Co)Polymerisate aus der Gruppe, bestehend aus (Meth)Acrylat(co)polymerisaten und Polyvinylestern, ausgewählt werden.

8. Mehrkomponentensystem nach einem der Ansprüche 1 bis 7, **dadurch gekennzeichnet, dass** das Oligomer und/oder Polymer (A) eine untergeordnete Menge an isocyanatreaktiven funktionellen Gruppen enthält oder enthalten.

9. Mehrkomponentensystem nach einem der Ansprüche 1 bis 8, **dadurch gekennzeichnet, dass** das Oligomer und/oder Polymer (B) eine untergeordnete Menge an Allophanatgruppen und/oder Carbamatgruppen enthält oder enthalten.

10. Mehrkomponentensystem nach Anspruch 8 oder 9, **dadurch gekennzeichnet, dass** die untergeordnete Menge bis zu 30 Äquivalent%, bezogen auf die im Oligomer und/oder Polymer (A) oder im Oligomer und/oder Polymer (B) jeweils vorhandenen Allophanatgruppen und/oder Carbamatgruppen und isocyanatreaktiven funktionellen Gruppen, beträgt.

11. Mehrkomponentensystem nach einem der Ansprüche 1 bis 10, **dadurch gekennzeichnet, dass** die isocyanatreaktiven funktionellen Gruppen aus der Gruppe, bestehend aus, Hydroxylgruppen, Thiolgruppen und primären und sekundären Aminogruppen, ausgewählt werden.

12. Mehrkomponentensystem nach einem der Ansprüche 1 bis 11, **dadurch gekennzeichnet, dass** das Aminoplastharz (C) mit Methylgruppen und/oder n-Butylgruppen alkyliert ist.

13. Mehrkomponentensystem nach einem der Ansprüche 1 bis 12, **dadurch gekennzeichnet, dass** die mit aktinischer Strahlung aktivierbaren Gruppen der Verbindung (D) mindestens eine mit aktinischer Strahlung aktivierbare Bindung enthalten.

14. Mehrkomponentensystem nach Anspruch 13, **dadurch gekennzeichnet, dass** mit aktinischer Strahlung aktivierbare Bindung eine Kohlenstoff-Kohlenstoff-Doppelbindung ("Doppelbindung") oder Kohlenstoff-Kohlenstoff -Dreifachbindung ("Dreifachbindung") ist.

15. Mehrkomponentensystem nach Anspruch 14, **dadurch gekennzeichnet, dass** die mit aktinischer Strahlung aktivierbaren Gruppen aus der Gruppe, bestehend aus (Meth)Acrylat-, Ethacrylat-, Crotonat-, Cinnamat-, Vinylether-, Vinylester-, Ethenylarylen-, Dicyclopentadienyl-, Norbornenyl-, Isoprenyl-, Isoprenyl-, Isopropenyl-, Allyl- oder Butenylgruppen; Ethenylarylen-, Dicyclopentadienyl-, Norbornenyl-, Isoprenyl-, Isopropenyl-, Allyl- oder Butenylethergruppen oder Ethenylarylen-, Dicyclopentadienyl-, Norbornenyl-, Isoprenyl-, Isopropenyl-, Allyl- oder Butenylestergruppen, ausgewählt werden.

16. Mehrkomponentensystem nach Anspruch 15, **dadurch gekennzeichnet, dass** die mit aktinischer Strahlung aktivierbaren Gruppen Acrylatgruppen sind.

17. Mehrkomponentensystem nach einem der Ansprüche 1 bis 16, **dadurch gekennzeichnet, dass** das Polyisocyanat (E) in untergeordneten Mengen blockierte Isocyanatgruppen enthält.

18. Mehrkomponentensystem nach einem der Ansprüche 1 bis 17, **dadurch gekennzeichnet, dass** das Polyisocyanat (E) mindestens eine mit aktinischer Strahlung aktivierbare Gruppen enthält.

19. Mehrkomponentensystem nach einem der Ansprüche 1 bis 18, **dadurch gekennzeichnet, dass** die Komponente (I)
- 5 bis 30 Gew.-% (A),
- 5 bis 30 Gew.-% (B),
- 1 bis 10 Gew.-% (C)
- 20 bis 70 Gew.-% (D),
jeweils bezogen auf den Festkörper der Komponente (I), enthält.

20. Mehrkomponentensystem nach einem der Ansprüche 1 bis 19, **dadurch gekennzeichnet, dass** die Komponente (II), bezogen auf den Festkörper, 50 bis 100 Gew.-% Polyisocyanat (E) enthält.

21. Mehrkomponentensystem nach einem der Ansprüche 1 bis 20, **dadurch gekennzeichnet, dass** die Komponente (I) und/oder die Komponente (II) mindestens einen Zusatzstoff (F) enthält oder enthalten.

22. Verwendung des Mehrkomponentensystems gemäß einem der Ansprüche 1 bis 21 zur Herstellung einer thermisch und mit aktinischer Strahlung härtbaren Mischung ("Triple-Cure-Mischung").

23. Verwendung nach Anspruch 22, **dadurch gekennzeichnet, dass** man zur Herstellung der Triple-Cure-Mischung mindestens eine Komponente (I) und mindestens eine Komponente (II) miteinander vermischt und die resultierende Mischung homogenisiert.

24. Verwendung nach Anspruch 23, **dadurch gekennzeichnet, dass** man die Komponente(n) (I) mit der oder den Komponente(n) (II) im Gewichtsverhältnis von 20:1 bis 2:1 vermischt.

25. Verwendung nach einem der Ansprüche 22 bis 24, **dadurch gekennzeichnet, dass** die Triple-Cure-Mischung der Herstellung von Formteilen und Folien sowie als Beschichtungsstoff, Klebstoff und Dichtungsmasse der Herstellung von Beschichtungen, Klebschichten und Dichtungen dient.

26. Verwendung nach Anspruch 25, **dadurch gekennzeichnet, dass** die Formteile, Folien, Beschichtungen, Klebschichten oder Dichtungen dem Umhüllen, dem Verpacken, dem Beschichten, dem Imprägnieren, dem Verkleben oder dem Abdichten von Fortbewegungsmitteln, inklusive Fluggeräte, Schiffe, Schienenfahrzeuge, mit Muskelkraft betriebene Fahrzeuge und Kraftfahrzeuge, sowie Teilen hiervon, von Bauwerken im Innen- und Außenbereich und Teilen hiervon, von Möbeln, von Türen, von Fenstern sowie im Rahmen der industrielle Lackierung von Glashohlkörpern, Coils, Container und Emballagen, von mechanischen, optischen und elektrischen Bauteilen und von weißer Ware, inklusive Haushaltsgeräte, Heizkessel und Radiatoren, dienen.

## Claims

1. Multicomponent system at least comprising
(I) at least one component comprising
(A) at least one oligomer and/or polymer containing on average at least two allophanate groups, carbamate groups or at least one carbamate group and at least one allophanate group,
(B) at least one oligomer and/or polymer containing on average at least two isocyanate-reactive functional groups,
(C) at least one partly or fully alkylated amino resin, and
(D) at least one compound containing on average at least two groups which can be activated with actinic radiation;
and
(II) at least one component comprising
(E) at least one polyisocyanate,
with the proviso that
- the equivalents ratio of isocyanate groups in component (II) to isocyanate-reactive functional groups in component (I) is from 0.2:1 to 1:0.2 and
- the equivalents ratio of allophanate groups and/or carbamate groups in the oligomer and/or polymer (A) to the N-methylol ether groups or the N-methylol and N-methylol ether groups in the amino resin (C) is from 0.2:1 to 1:0.2.

2. Multicomponent system according to Claim 1, **characterized in that** the equivalents ratio of
- isocyanate groups + N-methylol ether groups or N-methylol and N-methylol ether groups (crosslinking agent groups) to
- isocyanate-reactive functional groups + allophanate groups and/or carbamate groups (binder groups)
is from 0.2:1 to 1:0.2.

3. Multicomponent system according to Claim 2, **characterized in that** the equivalents ratio of crosslinking agent groups to binder groups is from 0.25:1 to 1:0.25.

4. Multicomponent system according to any of Claims 1 to 3, **characterized in that** the equivalents ratio of isocyanate groups in component (II) to isocyanate-reactive functional groups in component (I) is from 0.3:1 to 1:0.3.

5. Multicomponent system according to any of Claims 1 to 4, **characterized in that** the equivalents ratio of allophanate groups and/or carbamate groups in the oligomer and/or polymer (A) to the N-methylol ether groups or the N-methylol and N-methylol ether groups in the amino resin (C) is from 0.3:1 to 1:0.3.

6. Multicomponent system according to any of Claims 1 to 5, **characterized in that** the oligomers and polymers (A) and (B) are selected from the group consisting of random, alternating, and block, linear, branched, and comb polyaddition resins, polycondensation resins, and addition (co)polymers of ethylenically unsaturated monomers.

7. Multicomponent system according to Claim 6, **characterized in that** the polyaddition resins and polycondensation resins are selected from the group consisting of polyesters, alkyds, polyurethanes, polylactones, polycarbonates, polyethers, epoxy resin-amine adducts, polyureas, polyamides and polyimides, and the addition (co)polymers are selected from the group consisting of (meth)acrylate (co)polymers and polyvinyl esters.

8. Multicomponent system according to any of Claims 1 to 7, **characterized in that** the oligomer and/or polymer (A) comprise/comprises a minor amount of isocyanate-reactive functional groups.

9. Multicomponent system according to any of Claims 1 to 8, **characterized in that** the oligomer and/or polymer (B) comprise/comprises a minor amount of allophanate groups and/or carbamate groups.

10. Multicomponent system according to Claim 8 or 9, **characterized in that** the minor amount is up to 30 equivalent%, based on the allophanate groups and/or carbamate groups and isocyanate-reactive functional groups present in each case in the oligomer and/or polymer (A) or in the oligomer and/or polymer (B).

11. Multicomponent system according to any of Claims 1 to 10, **characterized in that** the isocyanate-reactive functional groups are selected from the group consisting of hydroxyl groups, thiol groups, and primary and secondary amino groups.

12. Multicomponent system according to any of Claims 1 to 11, **characterized in that** the amino resin (C) is alkylated with methyl groups and/or n-butyl groups.

13. Multicomponent system according to any of Claims 1 to 12, **characterized in that** the groups of the compound (D) which can be activated with actinic radiation contain at least one bond which can be activated with actinic radiation.

14. Multicomponent system according to Claim 13, **characterized in that** a bond which can be activated with actinic radiation is a carbon-carbon double bond ("double bond") or carbon-carbon triple bond ("triple bond").

15. Multicomponent system according to Claim 14, **characterized in that** the groups which can be activated with actinic radiation are selected from the group consisting of (meth)acrylate, ethacrylate, crotonate, cinnamate, vinyl ether, vinyl ester, ethenylarylene, dicyclopentadienyl, norbornenyl, isoprenyl, isopropenyl, allyl or butenyl groups; ethenylarylene ether, dicyclopentadienyl ether, norbornenyl ether, isoprenyl ether, isopropenyl ether, allyl ether, and butenyl ether groups; and ethenylarylene ester, dicyclopentadienyl ester, norbornenyl ester, isoprenyl ester, isopropenyl ester, allyl ester, and butenyl ester groups.

16. Multicomponent system according to Claim 15, **characterized in that** the groups which can be activated with actinic radiation are acrylate groups.

17. Multicomponent system according to any of Claims 1 to 16, **characterized in that** the polyisocyanate (E) comprises blocked isocyanate groups in minor amounts.

18. Multicomponent system according to any of Claims 1 to 17, **characterized in that** the polyisocyanate (E) comprises at least one group which can be activated with actinic radiation.

19. Multicomponent system according to any of Claims 1 to 18, **characterized in that** component (I) contains
- from 5 to 30% by weight of (A),
- from 5 to 30% by weight of (B),
- from 1 to 10% by weight of (C), and
- from 20 to 70% by weight of (D),
based in each case on the solids of component (I).

20. Multicomponent system according to any of Claims 1 to 19, **characterized in that** component (II) contains, based on the solids, from 50 to 100% by weight of polyisocyanate (E).

21. Multicomponent system according to any of Claims 1 to 20, **characterized in that** component (I) and/or component (II) comprise/comprises at least one additive (F).

22. Use of the multicomponent system according to any of Claims 1 to 21 to prepare a mixture curable thermally and with actinic radiation ("triple-cure mixture").

23. Use according to Claim 22, **characterized in that** the triple-cure mixture is prepared by mixing at least one component (I) and at least one component (II) with one another and homogenizing the resulting mixture.

24. Use according to Claim 23, **characterized in that** component(s) (I) is (are) mixed with component (s) (II) in a weight ratio of from 20:1 to 2:1.

25. Use according to any of Claims 22 to 24, **characterized in that** the triple-cure mixture serves to produce mouldings and films and also as a coating material, adhesive, and sealant to produce coatings, adhesive films, and seals.

26. Use according to Claim 25, **characterized in that** the mouldings, films, coatings, adhesive films or seals serve for the wrapping, packaging, coating, impregnation, adhesive bonding or sealing of means of transport, including aircraft, boats, rail vehicles, vehicles driven by muscle power and motor vehicles, and parts thereof, the interior and exterior of buildings and parts thereof, furniture, doors, windows, and also, in the context of industrial coating, hollow glassware, coils, containers, and packaging, mechanical components, optical components, and electrical components, and white goods, including household appliances, boilers, and radiators.

## Revendications

1. Système à plusieurs composants, comprenant au minimum :
(I) au moins un composant, contenant :
(A) au moins un oligomère et/ou un polymère, contenant dans la moyenne statistique au moins deux groupes allophanate, deux groupes carbamate ou au moins un groupe carbamate et au moins un groupe allophanate,
(B) au moins un oligomère et/ou polymère, contenant dans la moyenne statistique au moins deux groupes fonctionnels réagissant aux isocyanates,
(C) au moins une résine aminoplaste partiellement ou complètement alcoylisée et
(D) au moins un composé, contenant dans la moyenne statistique deux groupes activables par rayonnement actinique;
et
(II) au moins un composant, contenant
(E) au moins un polyisocyanate,
dans la mesure où :
- le rapport équivalent de groupes isocyanate dans le composant (II) par rapport aux groupes fonctionnels réagissant aux isocyanates dans le composant (I) est compris entre 0,2:1 et 1:0,2 et
- le rapport équivalent de groupes allophanate et/ou de groupes carbamate dans l'oligomère et/ou le polymère (A) par rapport aux groupes N-méthyloléther ou aux groupes N-méthylol et N-méthyloléther dans la résine aminoplaste (C) est compris entre 0,2:1 et 1:0,2.

2. Système à plusieurs composants selon la revendication 1, **caractérisé en ce que** le rapport équivalent de
- groupes isocyanate + groupes N-méthyloléther ou groupes N-méthylol et N-méthyloléther (groupes de réticulants) par rapport à des
- groupes fonctionnels réagissant aux isocyanates + groupes allophanate et/ou groupes carbamate (groupes de liants)
est compris entre 0,2:1 et 1:0,2.

3. Système à plusieurs composants selon la revendication 2, **caractérisé en ce que** le rapport équivalent de groupes de réticulants par rapport à des groupes de liants est compris entre 0,25:1 et 1:0,25.

4. Système à plusieurs composants selon l'une des revendications 1 à 3, **caractérisé en ce que** le rapport équivalent de groupes isocyanate dans le composant (II) par rapport aux groupes fonctionnels réagissant aux isocyanates dans le composant (I) est compris entre 0,3:1 et 1:0,3.

5. Système à plusieurs composants selon l'une des revendications 1 à 4, **caractérisé en ce que** le rapport équivalent de groupes allophanate et/ou de groupes carbamate dans l'oligomère et/ou le polymère (A) par rapport aux groupes N-méthyloléther ou aux groupes N-méthylol et N-méthyloléther dans la résine aminoplaste (C) est compris entre 0,3:1 et 1:0,3.

6. Système à plusieurs composants selon l'une des revendications 1 à 5, **caractérisé en ce que** les oligomères et polymères (A) et (B) sont sélectionnés dans le groupe constitué de résines de polyaddition, de résines de polycondensation de même que de (co)polymères de monomères éthyléniquement insaturés, à structure statistique, alternante et en bloc, linéaires et ramifiés et à structure ramifiée en forme de peigne.

7. Système à plusieurs composants selon la revendication 6, **caractérisé en ce que** les résines de polyaddition et les résines de polycondensation sont sélectionnées dans le groupe constitué de polyesters, alkydes, polyuréthanes, polylactones, polycarbonates, polyéthers, adducts de résine époxyde-amine, polyurées, polyamides et polyimides et que les (co)polymères sont sélectionnés dans le groupe constitué de (co)polymères de (méth)acrylate et d'esters polyvinyliques.

8. Système à plusieurs composants selon l'une des revendications 1 à 7, **caractérisé en ce que** l'oligomère et/ou le polymère (A) contient ou contiennent une quantité subordonnée de groupes fonctionnels réagissant aux isocyanates.

9. Système à plusieurs composants selon l'une des revendications 1 à 8, **caractérisé en ce que** l'oligomère et/ou le polymère (B) contient ou contiennent une quantité subordonnée de groupes allophanate et/ou de groupes carbamate.

10. Système à plusieurs composants selon la revendication 8 ou 9, **caractérisé en ce que** la quantité subordonnée comprend jusqu'à 30% d'équivalent, par rapport aux groupes allophanate et/ou aux groupes carbamate et aux groupes fonctionnels réagissant aux isocyanates présents dans l'oligomère et/ou le polymère (A) et/ou dans l'oligomère et/ou le polymère (B).

11. Système à plusieurs composants selon l'une des revendications 1 à 10, **caractérisé en ce que** les groupes fonctionnels réagissant aux isocyanates sont sélectionnés dans le groupe constitué de groupes hydroxyle, de groupes thiol et des groupes amino primaires et secondaires.

12. Système à plusieurs composants selon l'une des revendications 1 à 11, **caractérisé en ce que** la résine aminoplaste (C) est alcoylée avec des groupes méthyle et/ou des groupes n-butyle.

13. Système à plusieurs composants selon l'une des revendications 1 à 12, **caractérisé en ce que** les groupes activables par rayonnement actinique du composé (D) comprennent au moins une liaison activable par rayonnement actinique.

14. Système à plusieurs composants selon la revendication 13, **caractérisé en ce qu'**une liaison double carbone-carbone ("liaison double") ou une liaison triple carbone-carbone ("liaison triple") est activable par rayonnement actinique.

15. Système à plusieurs composants selon la revendication 14, **caractérisé en ce que** les groupes activables par rayonnement actinique sont sélectionnés dans le groupe constitué de groupes (méth)acrylate, éthacrylate, crotonate, cinnamate, vinyléther, vinylester, éthénylarylène, dicyclopentadienyle, norbornényle, isoprényle, isopropényle, allyle ou butényle; des groupes éthénylarylène, dicyclopentadiényle, norbornényle, isoprényle, isopropényle, allyle ou butényléther ou des groupes éthénylarylène, dicyclopentadiényle, norbornényle, isoprényle, isopropényle, allyle ou buténylester.

16. Système à plusieurs composants selon la revendication 15, **caractérisé en ce que** les groupes activables par rayonnement actinique sont des groupes acrylate.

17. Système à plusieurs composants selon l'une des revendications 1 à 16, **caractérisé en ce que** le polyisocyanate (E) comprend des groupes isocyanate bloqués en quantités subordonnées.

18. Système à plusieurs composants selon l'une des revendications 1 à 17, **caractérisée en ce que** le polyisocyanate (E) comprend au moins un groupe activable par rayonnement actinique.

19. Système à plusieurs composants selon l'une des revendications 1 à 18, **caractérisé en ce que** le composant (A) contient
- 5 à 30% en poids de (A),
- 5 à 30% en poids de (B),
- 1 à 10% en poids de (C),
- 20 à 70% en poids de (D),
par rapport chaque fois au solide du composant (I).

20. Système à plusieurs composants selon l'une des revendications 1 à 19, **caractérisé en ce que** le composant (II), par rapport au solide, contient 50 à 100% en poids de polyisocyanate (E).

21. Système à plusieurs composants selon l'une des revendications 1 à 20, **caractérisé en ce que** le composant (I) et/ou le composant (II) contient au moins un additif (F).

22. Utilisation du système à plusieurs composants selon l'une des revendications 1 à 21 pour la préparation d'un mélange thermodurcissable et durcissable par rayonnement actinique (mélange "triple-cure").

23. Utilisation selon la revendication 22, **caractérisée en ce que** pour la préparation du mélange triple-cure, on mélange mutuellement au moins un composant (I) et au moins un composant (II) et que l'on homogénéise le mélange résultant.

24. Utilisation selon la revendication 23, **caractérisée en ce que** l'on mélange le (s) composant (s) (I) avec le(s) composant(s) (II) selon un rapport en poids compris entre 20:1 et 2:1.

25. Utilisation selon l'une des revendications 22 à 24, **caractérisée en ce que** le mélange triple-cure sert à la préparation de pièces de forme et de feuilles minces de même que de revêtement, d'adhésif et de masse de scellement pour la préparation d'enductions, de couches adhésives et de joints.

26. Utilisation selon la revendication 25, **caractérisée en ce que** les pièces de forme, feuilles minces, enductions, couches adhésives ou joints servent à l'enrobage, à l'emballage, à l'enduction, à l'imprégnation, au collage ou au scellement de moyens de transport, y compris les avions, bateaux, véhicules ferroviaires, véhicules actionnés par la force musculaire et véhicules automoteurs, ainsi que leurs pièces, d'ouvrages intérieurs et extérieurs et de leurs éléments, de meubles, de portes, de fenêtres de même que dans le cadre du vernissage industriel de corps creux en verre, coils (bobines), conteneurs et emballages, de pièces mécaniques, optiques et électriques et de produits blancs, y compris les appareils ménagers, les chaudières de chauffage et les radiateurs.
